# EUROPÄISCHE PATENTSCHRIFT

(11) **EP 1 051 287 B1**
(45) Veröffentlichungstag und Bekanntmachung des Hinweises auf die Patenterteilung: **15.03.2006**
(21) Anmeldenummer: 99958151.5
(22) Anmeldetag: 01.12.1999
(51) Int. Cl.: B27B 5/32, B24B 45/00, B23B 31/36

(54) **SPANNVORRICHTUNG ZUR BEFESTIGUNG VON ROTATIONSWERKZEUGEN**
CLAMPING DEVICE FOR FIXING ROTATIONAL TOOLS
DISPOSITIF DE SERRAGE DESTINE A LA FIXATION D'OUTILS ROTATIFS

(30) Priorität: 01.12.1998 DE 19855374
(43) Veröffentlichungstag der Anmeldung: 15.11.2000
(73) Patentinhaber: Ledermann GmbH, 72160 Horb (DE)
(72) Erfinder: KATZ, Otto, D-72160 Horb am Neckar (DE)
(74) Vertreter: Riedel, Peter
(86) Internationale Anmeldenummer: PCT/EP1999/009348
(87) Internationale Veröffentlichungsnummer: WO 2000/032369

(56) Entgegenhaltungen:
- DE-A- 2 039 925
- DE-A- 2 204 941
- DE-A- 2 507 771
- US-A- 139 544
- US-A- 5 924 208

## Beschreibung

Die Erfindung betrifft eine Spannvorrichtung zur Befestigung von Rotationswerkzeugen, wie Kreissägeblättern, Fräsern und dergleichen. Ein solche Vorrichtung ist aus DE-A-2 039 925 bekannt.

Aus der DE 23 20 919 C3 ist eine Spannvorrichtung mit einem Werkzeugträger bekannt, welcher mit einer Nabe auf einem verjüngten Zapfen einer Antriebswelle unter drehfester Verbindung mittels eines formschlüssigen Verbindungselementes aufschiebbar ist. Der Werkzeugträger ist mit einer am freien Zapfenende aufschraubbaren Konterschraube axial fixierbar. Der Werkzeugträger weist einen radial zur Nabenachse ausgebildeten Werkzeugflansch auf, auf den das Werkzeug, beispielsweise ein Kreissägeblatt, flächig anliegend aufspannbar ist. Die Werkzeugbefestigung erfolgt bei der bekannten Spannvorrichtung durch Schrauben, welche das Kreissägeblatt durchsetzen und in den Werkzeugträger eingeschraubt sind. Bei der bekannten Spannvorrichtung sind in dem Werkzeugträger Federeinrichtungen vorgesehen, welche axial auf die Befestigungsschrauben wirken und die Werkzeug-Spannbolzen in Richtung Werkzeugspannstellung vorspannen.

Um den Rundlauf des Werkzeugflansches und damit des Werkzeugs auf der Antriebswelle zu gewährleisten, schlägt die DE 297 23 270 U1 vor, den Werkzeugträger auf dem Wellenzapfen zu zentrieren. Hierzu soll der axialen Spannwirkung der Konterschraube am Ende des Wellenzapfens auf die Nabe des Werkzeugträgers ein Zentrierring zwischengeschaltet werden, welcher mit einer konischen Innenfläche auf dem konisch zugespitzt ausgebildeten Zapfenende aufliegt.

Es hat sich jedoch herausgestellt, daß auch mit einer Zentrierung des Werkzeugträgers auf der Antriebswelle ein exakter Planlauf des Rotationswerkzeuges in den meisten Fällen, insbesondere bei Werkzeugen mit großen Durchmessern, nicht erreichbar ist.

Die DE 40 12 980 A1 offenbart eine hydraulische Spannmutter für Rotationswerkzeuge, welche auf einem Aufnahmedorn montiert sind. Im Körper der Spannmutter sind mehrere Druckkolben konzentrisch und parallel zur Rotationsachse angeordnet, die durch in der Spannmutter enthaltene Druckschrauben über ein Hydraulikmedium auf die Stirnfläche des Werkzeuges eine Spannkraft ausüben. Zwischen den hydraulischen Systemen der Druckkolben besteht keine Verbindung, wodurch mit den einzelnen Druckkolben unterschiedliche Spannkräfte auf das Werkzeug ausgeübt werden können. Mit der bekannten hydraulischen Spanneinrichtung ist eine Nachjustierung des Werkzeuges nach der Inbetriebnahme möglich, wenn sich herausstellen sollte, daß das Werkzeug, beispielsweise ein Kreissägeblatt mit einer Unwucht umläuft. Um die Rundlaufgenauigkeit zu verbessern, wird einer der Druckkolben, mit der das Werkzeug aufgespannt ist, weiter ausgeschoben. Dabei wird das Werkzeug örtlich gezielt verbogen, so daß aufgrund der Steifigkeit des Werkzeuges nur eine Verstellung des Werkzeuges in engen Bereichen möglich ist. Mit der bekannten hydraulischen Spannmutter ist bei jedem Aufspannen eines Werkzeuges eine anschließende Einstellung des Rundlaufes erforderlich.

Der vorliegenden Erfindung liegt die Aufgabe zugrunde, eine Spannvorrichtung für ein Rotationswerkzeug derart auszubilden, daß ein einfaches Ausspannen des Werkzeuges möglich ist und dabei ein exakt einstellbarer Planlauf des Rotationswerkzeuges gewährleistet ist.

Diese Aufgabe wird erfindungsgemäß mit den Merkmalen des Patentanspruchs 1 gelöst.

Erfindungsgemäß ist eine an der Antriebswelle abgestützte Justiereinrichtung vorgesehen, mit der die Winkellage der Flanschfläche des Werkzeugträgers gegenüber der Achse der Antriebswelle einstellbar ist. Dabei ist eine einmalige Justierung des Werkzeugträgers nach dessen Montage ausreichend, um auch nach einem Werkzeugwechsel eine hohe Güte der Rundlaufgenauigkeit des neuen Werkzeuges sicherzustellen. Beim Werkzeugswechsel hat so lediglich ein Aufspannen des Rotationswerkzeuges auf dem schon justierten Werkzeugträger zu erfolgen. Eine Nachjustierung ist dabei jederzeit möglich.

Die zum Aufschieben des Werkzeugträgers auf die Welle vorgesehene Passung mit einem Passungsspiel erlaubt eine Winkelkorrektur der Nabenachse des Werkzeugträgers von der Längsachse der Antriebswelle im Rahmen des Passungsspieles. Auch kann mit der Justiereinrichtung der Werkzeugplanlauf präzise eingestellt werden, wenn der Wellenzapfen bei seiner Bearbeitung, beispielsweise beim Fräsen einer Paßfedernut für die Werkzeugträgernabe, aus der koaxialen Lage zur Antriebswellenachse gebogen werden sollte.

Bei der erfindungsgemäßen Spanneinrichtung kann der Werkzeugträger auch vorteilhaft aus einem Leichtmetall wie Aluminium bestehen. Bei bekannten Spanneinrichtungen, bei denen die Justiereinrichtung direkt auf das Werkzeug einwirkt und dieses verbiegt, sind unterschiedliche Materialien des Werkzeugträgers und der Antriebswelle nicht möglich, da die Wärmeeinwirkung im Betrieb der Werkzeugmaschine einen Verzug des Werkzeuges aufgrund von Wärmespannungen verursacht. Bei der erfindungsgemäßen Spannvorrichtung hingegen ist die Justierung des Werkzeugträgers und damit des Werkzeuges von der Abindung des Werkzeuges an die Antriebswelle entkoppelt. Eine einmalige Ausrichtung des Werkzeugträgers vor dem Aufspannen des Rotationswerkzeuges auf dem Werkzeugträger ist zur Gewährleistung des Rundlaufes des Werkzeuges ausreichend.

Bei der Montage der Spannvorrichtung wird der Werkzeugträger gegen ein Anschlagelement, das am freien Ende des Zapfens der Antriebswelle angesetzt wird, in der justierten Ausrichtung verspannt.

Die Justiereinrichtung umfaßt mindestens ein axial verstellbares Stellelement, welches an einer im Abstand zur Nabenachse befindlichen Stelle auf den Werkzeugträger einwirkt.

Bei einem Werkzeugträger, der einen radial zur Nabenachse ausgebildeten Werkzeugflansch aufweist, auf den das Rotationswerkzeug flächig anliegend aufspannbar ist, beaufschlagt die Justiereinrichtung eine dem Werkzeugflansch abgewandte Rückseite des Werkzeugträgers. Die senkrecht zur Nabenachse am Werkzeugträgerteil gebildete Flanschfläche kann genau senkrecht zur Längsachse der Antriebswelle justiert werden, so daß auch Werkzeuge mit großen Durchmessern wie etwa Kreissägeblätter ohne Planlauffehler und daher unwuchtsfrei arbeiten können.

Zweckmäßig wird der Werkzeugträger mit einem Konterschraubenelement axial auf dem Wellenzapfen verspannt. Vorteilhaft wird eine Konterschraube eingesetzt, die in das freie Ende des Zapfens einschraubbar ist und mit ihrem Schraubenkopf die axiale Spannbeaufschlagung ermöglicht. Es kann jedoch auch beispielsweise eine auf das Zapfenende aufgeschraubte Kontermutter vorteilhaft sein. Als Anschlagelement am Wellenzapfen kann auch mit Vorteil ein Klemmring oder ähnliches verwendet werden.

Zwischen der Konterschraube zur axialen Verspannung des Werkzeugträgers und der Nabe ist ein mit dem Werkzeugträger radial gegenüber dem Zapfen verrückbarer Gelenkring angeordnet, welcher bei einer Betätigung der Stellelemente eine Bewegung des Werkzeugträgers und eine entsprechende Verschwenkung des Werkzeugflansches gegenüber der Antriebswellenachse gestattet.

Vorteilhaft besteht der Gelenkring aus einem von der Konterschraube beaufschlagten Innenring und einem mit dem Werkzeugträger in Wechselwirkung stehenden Außenring, welche an einer angestellt zur Nabenachse liegenden Gleitbahn aneinanderliegen. über die Gleitbahn ist sowohl eine Übertragung der axialen Vorspannkraft der Kontermutter auf den Werkzeugträger als auch eine Relativbewegung des Werkzeugträgers mit seiner Nabe gegenüber dem Wellenzapfen möglich.

Die relative Gleitbewegung der Ringelemente des Gelenkringes kann verbessert werden, wenn die Gleitbahn am Innenring konvex ausgebildet ist.

In bevorzugter Ausgestaltung der Erfindung umfaßt die Justiereinrichtung einen Stützkörper, welcher mehrere, um die Antriebswelle gruppierte Stellelemente aufweist. Durch aufeinander abgestimmte Einstellung der einzelnen Stellelemente kann der Werkzeugträger in die gewünschte Position und mit ihm der Werkzeugflansch mit dem daran zu haltenden Rotationswerkzeug in eine exakt senkrecht zur Antriebswellenachse liegende Position gebracht werden, bei der die Nabenachse ins Zentrum der Antriebswelle fällt. Dabei können die Stellelemente vorteilhaft als Stellschrauben ausgebildet sein, welche in Durchgangsgewindebohrungen im Stützkörper gehalten sind und mit ihren aufschiebbaren Schraubenschäften auf den Werkzeugträger einwirken.

Zweckmäßig ist der Stützkörper ringförmig ausgebildet und auf dem Zapfen der Antriebswelle vor dem Werkzeugträger aufschiebbar und wird von der Kontermutter mit dem Werkzeugträger axial gegen eine entsprechende Widerlagerformgebung der Antriebswelle verspannt werden. Die Antriebswelle kann dabei keilförmig ausgebildet sein. Besonders zweckmäßig ist jedoch eine zylindrisch abgesetzte Ausbildung des Zapfens der Antriebswelle, wobei der ringförmige Stützkörper und der Werkzeugträger axial gegen den Wellenabsatz verspannt werden können.

Um mit den Stellschrauben den Werkzeugträger abzudrücken und zu justieren, sind der Stützkörper und der Werkzeugträger unter Ausbildung eines Spaltes beabstandet angeordnet. Dabei ist im Bereich der Nabe an wenigstens einem der Bauteile ein stirnseitig hervorstehender Spannabsatz ausgebildet, welcher unter Ausbildung des Spaltes eine axiale Anlage gewährleistet. Der Spannabsatz kann zweckmäßig konvex gewölbt sein. Beim Justieren des Werkzeugträgers kann die relativ bewegte Fläche auf dem konvex gewölbten Widerlager bei punktueller Anlage abgerollt werden.

Ausführungsbeispiele der Erfindung sind nachstehend anhand der Zeichnung näher erläutert. Es zeigen:
- Fig. 1: eine teilweise geschnittene Teilansicht einer Spannvorrichtung mit Justiereinrichtung für das Rotationswerkzeug,
- Fig. 2: eine Spannvorrichtung mit einer alternativen Ausgestaltung der Justiervorrichtung für das Rotationswerkzeug.

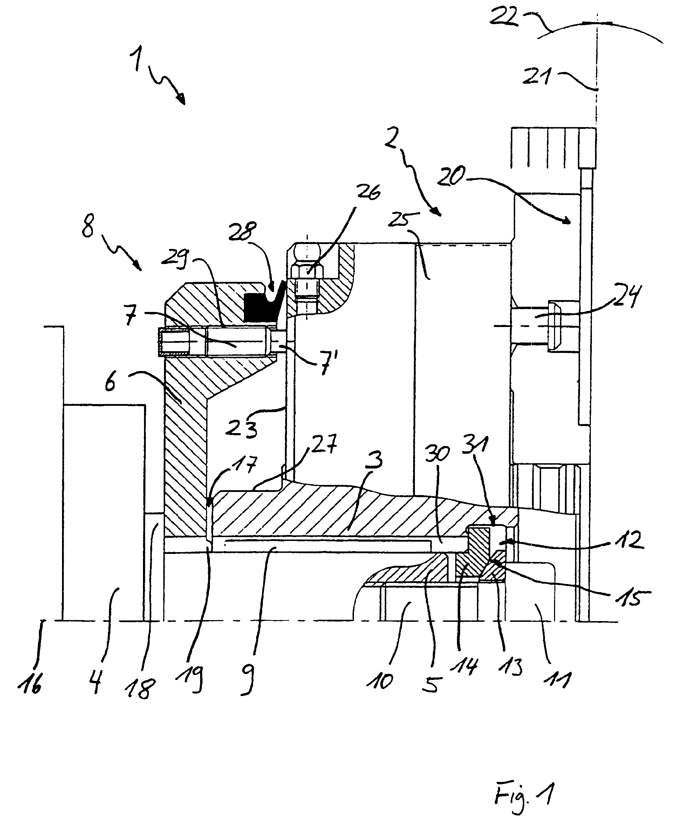

Fig. 1 zeigt eine Spannvorrichtung 1 für das rotierend antreibbare Zerspanungswerkzeug einer Kreissäge. Das Kreissägeblatt wird an einem Werkzeugträger 2 befestigt, welcher mit einer Nabe 3 auf einen zylindrisch abgesetzten Zapfen 5 einer Antriebswelle 4 unter drehfester Verbindung mittels eines formschlüssigen Verbindungselementes, im vorliegenden Fall einer Paßfeder 9, aufschiebbar ist. Der Werkzeugträger 2 weist einen radial zur Nabenachse 16 ausgebildeten Werkzeugflansch 20 auf, auf den das Kreissägeblatt flächig anliegend aufspannbar ist. Die Flanschebene 21 des Werkzeugflansches 20, in der das Rotationswerkzeug umlaufen soll, liegt senkrecht zur Nabenachse 16. Das Aufspannen des Werkzeugblattes erfolgt in für sich bekannter Weise durch Spannbolzen 24, welche gegen eine Federkraft aus dem Werkzeugflansch 20 axial ausfahrbar sind und entsprechende öffnungen im Kreissägeblatt durchsetzen. Die Rückstellkraft von Federpaketen, welche in einem Federspeicher 25 des Werkzeugträgers 2 aufgenommen sind und jeweils einen der Spannbolzen 24 beaufschlagen, ziehen die Spannbolzen 24 in den Federspeicher 25 ein, welche mit ihren Bolzenköpfen das Kreissägeblatt flächig an den Werkzeugflansch 20 spannen. Die öffnende Axialverschiebung der Spannbolzen 24 kann hydraulisch oder pneumatisch ausgelöst werden. Im Gehäuse des Federspeichers 25 ist ein Nippel 26 gehalten, durch den Druckluft ins Innere des Federspeichers 25 zum Lösen der Spannbolzen 24 eingeleitet werden kann. Es sind auch Gestaltungen der Spannvorrichtung denkbar, wobei das Rotationswerkzeug zwischen dem Flansch des Werkzeugträgers und einem Scheibenelement eingeklemmt wird, welches von den Spannbolzen 24 beaufschlagt wird und auf die dem Werkzeugträger abgewandte Fläche des Werkzeuges wirkt. Mit der Justiereinrichtung gemäß der vorliegenden Erfindung ist ein exakter Werkzeug-Planlauf bei Werkzeugträgern der Bauart mit starrer Koppelung der Werkzeughalterung/Flanschebene mit der Nabenausrichtung einstellbar. Möglich wäre beispielsweise auch eine Ausgestaltung, bei der der Werkzeugflansch an einem separaten Bauteil ausgebildet wird und mit dem Rotationswerkzeug an dem Werkzeugträger verspannt wird.

Der Werkzeugträger 2 wird nach dem Aufschieben auf den Wellenzapfen 5 durch eine Konterschraube 11 axial verspannt, welche mit ihrem Schraubenschaft 10 in eine axiale Gewindebohrung am freien Zapfenende einschraubbar ist. Die Konterschraube 11 bildet dabei einen Anschlag mit Wirkung auf den Werkzeugträger 2 gegen die Stellschrauben 7 der Justiereinrichtung 8, welche unten näher beschrieben ist. Die Maßtoleranzen der Durchmesser des Wellenzapfens 5 und der Nabe 3 des Werkzeugträgers 2 sind so bemessen, daß ein Passungsspiel entsteht, welches ein Aufschieben des Werkzeugträgers 2 ermöglicht. Die Drehmomentübertragung erfolgt durch eine Paßfeder 9, welche in eine Paßfedernut 30 in der Nabe 3 eingreift. Das Passungsspiel führte beim Verspannen der Werkzeugträger bekannter Spanneinrichtungen dazu, daß der Werkzeugträger häufig gegenüber dem Wellenzapfen verschoben fixiert wurde und die Nabenachse nicht mit der Wellenachse der Antriebswelle 4 zusammenfiel, so daß sich Planlauffehler des Werkzeuges, insbesondere bei großen Werkzeugdurchmessern ergaben. Um sicherzustellen, daß der Werkzeugträger mit einem exakt senkrecht zur Antriebswelle 4 liegenden Werkzeugflansch befestigt wird, ist eine Justiereinrichtung 8 vorgesehen, welche ein einstellbares Verschwenken des Werkzeugflansches 20 mit seiner Flanschebene 21 in Pfeilrichtung 22 ermöglicht. Die Justiereinrichtung 8 umfaßt mehrere um die Antriebswelle 4 gruppierte Stellschrauben 7, welche in einem ringförmigen Stützkörper 6 gehalten sind, welche seinerseits an der Antriebswelle 4 abgestützt ist. Die Stellschrauben 7 sind in Gewindebohrungen 29 im ringförmigen Stützkörper 6 gehalten und wirken mit ihrem freien Schaftende 7' auf eine dem Werkzeugflansch 20 gegenüberliegende Rückseite 23 des Werkzeugträgers 2. Im vorliegenden Fall ist die von den Stellschrauben beaufschlagte Fläche die Rückseite 23 des trommelartig ausgebildeten Federspeichers 25. Die Stellschrauben 7 sind mit Abstand zur Nabenachse 16 angeordnet, und durch entsprechendes Einstellen der aus dem Stützkörper 6 austretenden Schaftlänge wird im Rahmen des Passungsspiel zwischen Antriebswelle 4 und Nabe 3 der Werkzeugträger 2 mit der Flanschebene 21 relativ zur Nabenachse 16 justiert.

Der ringförmige Stützkörper 6 ist auf dem Zapfen 5 der Antriebswelle 4 aufgeschoben und zwischen dem Wellenabsatz 18 und der Nabe 3 des Werkzeugträgers 2 angeordnet. Der Stützkörper 6 wird gemeinsam mit dem Werkzeugträger 2 von der Konterschraube 10 axial festgelegt und verspannt. Im Bereich der Nabe, das heißt benachbart dem Mantelbereich des Wellenzapfens 5, steht aus der Stirnseite des Stützkörpers 6 ein Spannabsatz 19 vor, an dem die gegenüberliegende axiale Stirnseite des Werkzeugträgers 2 anliegt. Der Spannabsatz 19 schafft dabei einen Spalt 17 zwischen der Nabe 3 des Werkzeugträgers 2 und dem Stützkörper 6, welcher die Relativbewegung des Werkzeugträgers 2 gegenüber der Antriebswelle zur Planlaufjustierung des Kreissägeblattes gewährleistet. Der Spalt 17 kann am Rand des ringförmigen Stützkörpers durch einen umlaufenden Dichtring 28 gegenüber der Umgebung der Spanneinrichtung 1 abgedichtet sein. Der Spannabsatz 19 am Stützkörper 6 ist konvex gewölbt ausgebildet, wodurch einerseits eine axiale Verspannung des Stützkörpers 6 und des Werkzeugträgers 2 auf dem Wellenzapfen 5 möglich ist. Zum anderen kann der Nabenzapfen 27, mit dem die Nabe 3 des Werkzeugträgers 2 an dem Stützkörper 6 axial anliegt, an der konvex gewölbten Spannabsatzoberfläche abgerollt werden und so mit einer punktuellen Anlage die justierende Relativbewegung des Werkzeugträgers 2 präzisiert werden.

Die Einstellbarkeit des Werkzeugplanlaufs mittels der Justiereinrichtung 8 ist durch einen mit dem Werkzeugträger 2 radial gegenüber dem Zapfen 5 verrückbaren Gelenkring 12 möglich, welcher zwischen der Konterschraube 10 und dem Werkzeugträger 2 zur axialen Kraftübertragung der Konterschraube 10 angeordnet ist. Der Gelenkring 12 besteht aus einem von der Konterschraube 10 axial beaufschlagten Innenring 13 und einem mit dem Werkzeugträger 2 in Wechselwirkung stehenden Außenring 14, welche an einer angestellt zur Nabenachse 16 liegenden Gleitbahn 15 aneinanderliegen. Die Gleitbahn ist dabei zum Werkzeugflansch etwa konisch erweitert. Auf den Innenring 13 wirkt der Schraubenkopf 11 der Konterschraube 10 ein und über die gemeinsame Anlagefläche mit dem Außenring 14 wird die axiale Kraft auf die Nabe 3 des Werkzeugträgers 2 übertragen. Der Außenring 14 greift zur axialen Kraftübertragung in einen Hinterschnitt 31 im Bereich der Nabe 3 ein. Der Innenring 13 und der Außenring 14 des Gelenkringes 12 sind radial gegeneinander verschiebbar und ermöglichen die zur Verschwenkung der Flanschebene 21 in Pfeilrichtung 22 erforderliche Justierbewegung des Werkzeugträgers 2. Die Gleitbahn 13 ist dabei vorteilhaft konvex am Innenring 13 ausgebildet. Beim Anziehen der grundsätzlich plan an dem Innenring 13 anliegenden Konterschraube 10 wird der Werkzeugträger 2 infolge der Zentrierwirkung der konischen Gleitfläche 15 des Gelenkringes 2 in die mittels der Stellschrauben 7 eingestellte Schwenklage gegenüber der Antriebswelle nach Art der Zentrierung gedrängt und dort verspannt.

Die erfindungsgemäße Spanneinrichtung ermöglicht auch nach einem Wechsel des Kreissägeblattes einen unwuchtsfreien Planlauf des neuen Werkzeuges, ohne daß eine neue Justierung erforderlich wird. Der Werkzeugträger 2 wird einmalig bei der Montage der Spannvorrichtung 1 auf der Antriebswelle 4 der hier nicht näher dargestellten Werkzeugmaschine ausgerichtet. Nachjustierungen der Flanschebene 21 gegenüber der Nabenachse 16 können dabei jederzeit vorgenommen werden, beispielsweise nach längerer Betriebsdauer.

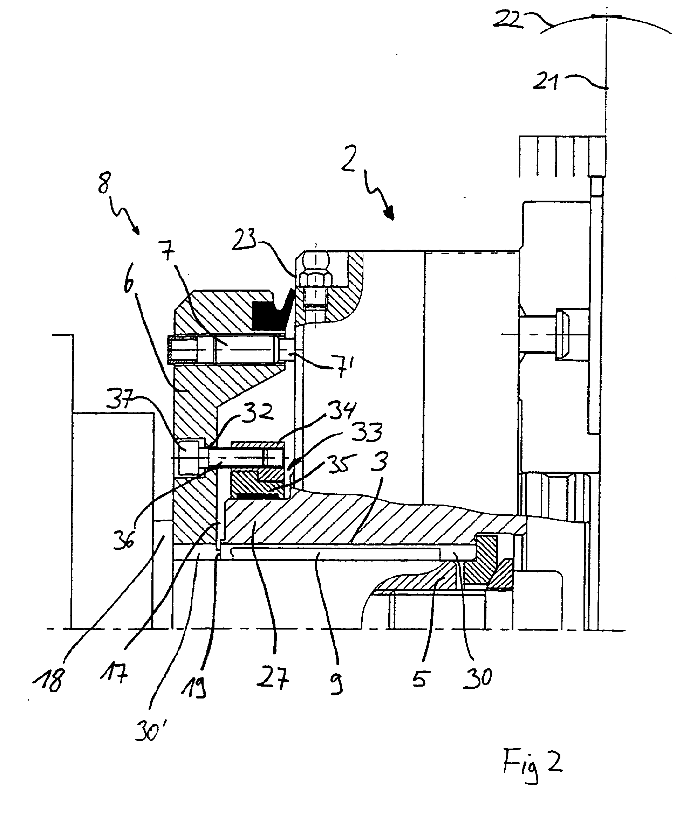

Fig. 2 zeigt eine alternative Ausgestaltung der Justiereinrichtung 8. Der Aufbau der Spannvorrichtung 1 und des Werkzeugträgers 2 stimmt weitgehend mit dem Ausführungsbeispiel der Fig. 1 überein. Für gleiche Bauteile sind dabei jeweils gleiche Bezugszeichen verwendet. Im Ausführungsbeispiel der Fig. 2 ist der ringförmige Stützkörper 6 axial beweglich an dem Werkzeugträger 2 befestigt und wird als gemeinsame Baugruppe auf den Wellenzapfen 5 aufgeschoben. Die Anbindung des Stützkörpers 6 an den Werkzeugträger 2 erfolgt mittels Ankerschrauben 37, welche den Stützkörper 6 mit radialem Spiel durchsetzen und mit dem Werkzeugträger 2 verschraubt sind. Auf dem Nabenzapfen 27 des Werkzeugträgers 2, welcher dem Stützkörperring 6 zugewandt liegt, ist ein Drehring 33 konzentrisch zur Nabenachse 16 befestigt, welcher einen relativ zum Werkzeugträger drehbeweglichen Außenring 34 umfaßt. In den drehbeweglichen Außenring 34 sind die Ankerschrauben 36 eingeschraubt. Das innere Ringelement 35 des Drehringes 33 ist zweckmäßig axial auf dem Nabenzapfen 27 festgelegt. Die Durchgangsbohrung 32 im Stützkörper 6 ist mit Spiel gegenüber dem Schraubenschaft der jeweiligen Ankerschraube 36 ausgebildet, um die zur Justierung erforderliche Relativbewegung zwischen dem Stützkörper 6 und dem Werkzeugträger 2 zu gewährleisten. Der Schraubenkopf 37 der Ankerschrauben hält mit seiner radialen Auflagefläche für die Stirnseite des Stützkörpers 6 den Stützkörper der Justiereinrichtung 8 an dem Werkzeugträger 2. Die aus Werkzeugträger 2 und Stützring 6 bestehende Baugruppe kann separat vorgefertigt und auf den Wellenzapfen 5 der Antriebswelle aufgeschoben werden. Im Ausführungsbeispiel der Fig. 2 kann der Spannabsatz 19 des Stützkörpers 6, welcher zur Bildung des axialen Spaltes 17 zwischen Stützkörper 6 und Nabenzapfen 27 vorgesehen ist, mit einer ebenen Oberfläche an dem Nabenteil 3 anliegen. Die Nabe 3 des Werkzeugträgers 2 kann gegebenenfalls ebenso mit einem entsprechend hervorstehenden Spannabsatz ausgestattet sein.

Bei dem gezeigten Ausführungsbeispiel mit einer Paßfederverbindung zwischen Welle 5 und Nabe 3 kann an der bereits mit Justiereinrichtung ausgerüsteten Baugruppe eine Paßfedernut 30' in der Bohrung des Stützringes 6 vor dem Aufschieben auf die Antriebswelle in Überdeckung mit der Paßfedernut 30 der Werkzeugträgernabe 3 gedreht werden.

## Patentansprüche

1. Spannvorrichtung zur Befestigung von Rotationswerkzeugen wie Kreissägeblattern, Fräsern und dgl., mit einem Werkzeugträger (2), welcher an einem Werkzeugflansch (20) eine Flanschfläche (21) aufweist, wobei der Werkzeugträger mit einer Nabe (3) auf einem Zapfen (5) einer Antriebswelle (4) mit Spiel aufschiebbar ist und mittels eines am freien Ende des Zapfens (5) ansetzbaren Anschlagelementes (10) axial fixierbar ist, und mit einer an der Antriebswelle (4) abgestützten Justiereinrichtung (8), mit der eine Planlaufjustierung der Flanschebene (21) des Werkzeugträgers (2) gegenüber der Achse der Antriebswelle (4) erfolgt, wobei die Justiereinrichtung (8) mindestens ein axial verstellbares Stellelement umfaßt, das an einer im Abstand zur Nabenachse (16) befindlichen Stelle an einer dem Werkzeugflansch (20) gegenüberliegenden Rückseite (23) auf den Werkzeugträger (2) einwirkt.

2. Spannvorrichtung nach Anspruch 1,
**dadurch gekennzeichnet, daß** der Werkzeugträger (2) einen radial zur Nabenachse (16) ausgebildeten Werkzeugflansch (20) aufweist, der vorzugsweise Teil des Rotationswerkzeuges ist und auf dem das Rotationswerkzeug aufspannbar ist, wobei die Justiereinrichtung (8) eine dem Werkzeugflansch (20) abgewandte Rückseite (23) des Werkzeugträgers (2) beaufschlagt.

3. Spannvorrichtung nach Anspruch 1 oder 2,
**dadurch gekennzeichnet, daß** als Anschlagelement (10) ein Konterschraubenelement (10) vorgesehen ist, welches am freien Ende des Zapfens (5) anschraubbar ist und den Werkzeugträger (2) axial verspannt.

4. Spannvorrichtung nach Anspruch 3,
**dadurch gekennzeichnet, daß** zwischen der Konterschraube (10) und dem Werkzeugträger (2) ein Gelenkring (12) mit radialem Spiel gegenüber dem Zapfen (5) angeordnet ist.

5. Spannvorrichtung nach Anspruch 4,
**dadurch gekennzeichnet, daß** der Gelenkring (12) aus einem von der Konterschraube (10) beaufschlagten Innenring (13) und einem mit dem Werkzeugträger (2) in Wechselwirkung stehenden Außenring (14) besteht, welche an einer angestellt zur Nabenachse (16) liegenden Gleitbahn (15) aneinanderliegen.

6. Spannvorrichtung nach Anspruch 5,
**dadurch gekennzeichnet, daß** die Gleitbahn (15) am Innenring (13) konvex ausgebildet ist.

7. Spannvorrichtung nach einem der Ansprüche 1 bis 6,
**dadurch gekennzeichnet, daß** die Justiereinrichtung (8) einen Stützkörper (6) umfaßt, welcher mehrere, um die Antriebswelle (4) gruppierte, Stellelemente (7) aufweist.

8. Spannvorrichtung nach Anspruch 7,
**dadurch gekennzeichnet, daß** die Stellelemente als Stellschrauben (7) ausgebildet sind, welche in Durchgangsgewindebohrungen (29) im Stützkörper (6) gehalten sind und mit ihren ausschiebbaren Schraubenschäften (7') auf den Werkzeugträger (2) einwirken.

9. Spannvorrichtung nach Anspruch 7 oder 8,
**dadurch gekennzeichnet, daß** der Stützkörper (6) ringförmig ausgebildet ist und vor dem Werkzeugträger (2) auf dem Zapfen (5) der Antriebswelle (4) aufschiebbar ist.

10. Spannvorrichtung nach Anspruch 9,
**dadurch gekennzeichnet, daß** der Stützkörper (6) und der Werkzeugträger (2) unter Ausbildung eines Spaltes (17) beabstandet angeordnet sind und im Bereich der Nabe (3) über einen an wenigstens einem der Bauteile (2, 6) stirnseitig hervorstehenden Spannabsatz (19) axial verspannbar aneinanderliegen.

11. Spannvorrichtung nach Anspruch 10,
**dadurch gekennzeichnet, daß** der Spannabsatz (19) konvex gewölbt ausgebildet ist.

12. Spannvorrichtung nach einem der Ansprüche 1 bis 11,
**dadurch gekennzeichnet, daß** der Werkzeugträger (2) aus einem Leichtmetall besteht.

13. Spannvorrichtung nach einem der Ansprüche 9 bis 12,
**dadurch gekennzeichnet, daß** der Stützkörper (6) mittels im wesentlichen axialer Anker (36) an dem Werkzeugträger (2) schwenkbeweglich gehalten ist, wobei die Anker (36) den Stützkörper (6) mit radialem Spiel durchsetzen und an ihren freien Enden einen Ankerkopf (37) mit radialer Auflagefläche für den Stützkörper (6) aufweisen.

14. Spannvorrichtung nach einem der Ansprüche 1 bis 13,
**dadurch gekennzeichnet, daß** der Werkzeugträger (2) und die Antriebswelle (4) mittels eines formschlüssigen Verbindungselementes (9) zwischen Nabe (3) und Zapfen (5) drehfest verbunden sind.

15. Spannvorrichtung nach Anspruch 13 oder 14,
**dadurch gekennzeichnet, daß** der Werkzeugträger (2) auf einem dem Stützkörper (6) zugewandten Nabenzapfen (27) einen Drehring (33) aufweist, an dessen relativ zum Werkzeugträger (2) drehbeweglichen Ringelement (34) die Anker (36) befestigt sind.

16. Spannevorrichtung nach einem der Ansprüche 1 bis 15,
**dadurch gekennzeichnet, daß** der Zapfen (5) der Antriebswelle (4) zylindrisch abgesetzt ausgebildet ist.

## Claims

1. A clamping device for fixing rotary tools such as circular saw blades, milling cutters or other similar devices having a tool support (2) which has a flange surface (21) on a tool flange (20), it being possible to push a hub (3) of the tool support (2) onto a journal (5) of a drive shaft (4) with play and to fix said tool support (2) axially by means of a stop element (10) which can be fitted to the free end of the journal (5), and having an adjusting device (8) supported on the drive shaft (4) which is used to adjust the run-out the flange plane (21) of the tool support (2) in relation to the axis of the drive shaft (4), the adjusting device (8) comprising at least one axially adjustable adjusting element which acts on the tool support (2) at a point on a rear face (23) opposite the tool flange (20) located a certain distance from the hub axis (16).

2. A clamping device in accordance with claim 1,
**characterised in that**
the tool support (2) has a tool flange (20) formed radially in relation to the hub axis (16) which preferably forms part of the rotary tool and to which the rotary tool can be clamped, the adjusting device (8) applying a load to a rear face (23) of the tool support (2) facing away from the tool flange (20).

3. A clamping device in accordance with claim 1 or 2,
**characterised in that**
the stop element (10) provided is a counter screw element (10) which can be screwed to the free end of the journal (5) and clamps the tool support (2) axially.

4. A clamping device in accordance with claim 3,
**characterised in that**
positioned between the counter screw (10) and the tool support (2) with radial play in relation to the journal (5) is an articulated ring (12).

5. A clamping device in accordance with claim 4,
**characterised in that**
the articulated ring (12) consists of an inner ring (13) to which a load is applied by the counter screw (10) and an outer ring (14) which interacts with the tool support (2), said rings (13, 14) lying adjacent to one another along a glide path (15) which lies at an angle to the hub axis (16).

6. A clamping device in accordance with claim 5,
**characterised in that**
the glide path (15) runs convexly along the inner ring (13).

7. A clamping device in accordance with one of claims 1 to 6,
**characterised in that**
the adjusting device (8) comprises a supporting body (6) which has several adjusting elements (7) grouped around the drive shaft (4).

8. A clamping device in accordance with claim 7,
**characterised in that**
the adjusting elements take the form of adjusting screws (7) which are secured in threaded holes (29) which pass through the supporting body (6) and have screw shafts (7') which can be pushed out and which act on the tool support (2).

9. A clamping device in accordance with claim 7 or 8,
**characterised in that**
the supporting body (6) is shaped in the form of a ring and can be pushed onto the journal (5) of the drive shaft (4) before the tool support (2).

10. A clamping device in accordance with claim 9,
**characterised in that**
the supporting body (6) and the tool support (2) are positioned a certain distance apart so as to form a gap (17), and lie adjacent to one another in the area of the hub (3) in such a manner that they can be clamped axially by means of a clamping projection (19) which projects from the front face of at least one of the components (2,6).

11. A clamping device in accordance with claim 10,
**characterised in that**
the clamping projection (19) is shaped in the form of a convex curve.

12. A clamping device in accordance with one of claims 1 to 11,
**characterised in that**
the tool support (2) is made of a light metal.

13. A clamping device in accordance with one of claims 9 to 12,
**characterised in that**
the supporting body (6) is secured to the tool support (2) in such a manner that it is able to pivot by means of essentially axial anchors (36), said anchors (35) passing through the supporting body (6) with radial play and having at their free ends anchor heads (37) with radial bearing surfaces for the supporting body (6).

14. A clamping device in accordance with one of claims 1 to 13,
**characterised in that**
the tool support (2) and the drive shaft (4) are connected between the hub (3) and the journal (5) in such a manner that they are unable to rotate by means of a positive-locking connecting element (9).

15. A clamping device in accordance with claim 13 or 14,
**characterised in that**
the tool support (2) has a rotating ring (33) on a hub journal (27) facing the supporting body (6) and the anchors (36) are secured to the ring element (34) of said rotating ring (33), it being possible to rotate said ring element (34) in relation to the tool support (2).

16. A clamping device in accordance with one of claims 1 to 15,
**characterised in that**
the journal (5) of the drive shaft (4) is cylindrically stepped.

## Revendications

1. Dispositif de serrage destiné à la fixation d'outils rotatifs, tels que des lames de scie circulaires, des fraises, et analogues, avec un porte-outil (2) présentant sur une bride d'outil (20) une face de bride (21), le porte-outil étant susceptible d'être emmanché, avec du jeu, avec un moyeu (3) sur un tourillon (5) d'un arbre d'entraînement (4) et d'être fixé axialement à l'aide d'un élément de butée (10) pouvant être rapporté sur l'extrémité libre du tourillon (5), et avec un dispositif de réglage (8) prenant appui sur l'arbre d'entraînement (4), à l'aide duquel un réglage du mouvement plan du plan de bride (21) du porte-outil (2) est effectué par rapport à l'axe de l'arbre d'entraînement (4), le dispositif de réglage (8) comprenant au moins un élément de réglage manoeuvrable axialement, agissant sur un emplacement, se trouvant à distance de l'axe de moyeu (16), sur une face arrière (23), opposée à la bride d'outil (20), sur le porte-outil (2).

2. Dispositif de serrage selon la revendication 1, **caractérisé en ce que** le porte-outil (2) présente une bride porte-outil (20), radiale par rapport à l'axe de moyeu (16) et faisant, de préférence, partie de l'outil rotatif et sur laquelle l'outil rotatif est susceptible d'être bridé, le dispositif de réglage (8) sollicitant une face arrière (23), opposée à la bride d'outil (20), du porte-outil (2).

3. Dispositif de serrage selon la revendication 1 ou 2, **caractérisé en ce qu'**est prévu en tant qu'élément de butée (10) un élément à contre-vis (10), susceptible d'être vissé sur l'extrémité libre du tourillon (5) et serrant axialement le porte-outil (2).

4. Dispositif de serrage selon la revendication 3, **caractérisé en ce que**, entre la contre-vis (10) et le porte-outil (2), est disposée une bague d'articulation (12), ayant un jeu radial par rapport au tourillon (5).

5. Dispositif de serrage selon la revendication 4, **caractérisé en ce que** la bague d'articulation (12) est formée d'une bague intérieure (13), sollicitée par la contre-vis (10), et d'une bague extérieure (14) placée en interaction avec le porte-outil (2), les bagues étant plaquées l'une sur l'autre, sur une piste de glissement (15) inclinée par rapport à l'axe de moyeu (16).

6. Dispositif de serrage selon la revendication 5, **caractérisé en ce que** la piste de glissement (15) est convexe sur la bague intérieure (13).

7. Dispositif de serrage selon l'une des revendications 1 à 6, **caractérisé en ce que** le dispositif d'ajustement (8) comprend un corps d'appui (6), présentant une pluralité d'éléments de réglage (7) groupés autour de l'arbre d'entraînement (4).

8. Dispositif de serrage selon la revendication 7, **caractérisé en ce que** les éléments de réglage sont réalisés sous la forme de vis de réglage (7), maintenues dans des trous taraudés traversants (29), ménagés dans le corps d'appui (6), et agissant sur le porte-outil (2) par leurs tiges de vis (7') susceptibles d'être emmanchées.

9. Dispositif de serrage selon la revendication 7 ou 8, **caractérisé en ce que** le corps d'appui (6) est de forme annulaire et est susceptible d'être emmanché sur le tourillon (5) de l'arbre d'entraînement (4) avant le porte-outil (2).

10. Dispositif de serrage selon la revendication 9, **caractérisé en ce que** le corps d'appui (6) et le porte-outil (2) sont espacés l'un de l'autre en formant un intervalle (17) et sont placés en appui l'un sur l'autre avec serrage axial dans la zone du moyeu (3), par l'intermédiaire d'un relief de serrage (19), en saillie frontale sur au moins l'un des composants (2, 6).

11. Dispositif de serrage selon la revendication 10, **caractérisé en ce que** le relief de serrage (19) est bombé de façon convexe.

12. Dispositif de serrage selon l'une des revendications 1 à 11, **caractérisé en ce que** le porte-outil (2) est formé en un métal léger.

13. Dispositif de serrage selon l'une des revendications 9 à 12, **caractérisé en ce que** le corps d'appui (6) est maintenu avec une mobilité en pivotement, au moyen d'un ancrage (16) sensiblement axial, sur le porte-outil (2), sachant que les ancrages (36) traversent le corps d'appui (6) avec un jeu radial et présentent, sur leurs extrémités libres, une tête d'ancrage (7) ayant une face de pose radiale pour le corps d'appui (6).

14. Dispositif de serrage selon l'une des revendications 1 à 13, **caractérisé en ce que** le porte-outil (2) et l'arbre d'entraînement (4) sont reliés de façon assujettie en rotation, au moyen d'un élément de liaison (9), opérant par une liaison à ajustement de forme, entre le moyeu (3) et le tourillon (5).

15. Dispositif de serrage selon la revendication 13 ou 14, **caractérisé en ce que** le porte-outil (2) présente, sur un tourillon de moyeu (27) tourné vers le corps d'appui (6), une bague tournante (33), sur l'élément annulaire (34), mobile en rotation par rapport au porte-outil (2), de laquelle est fixé l'ancrage (36).

16. Dispositif de serrage selon l'une des revendications 1 à 15, **caractérisé en ce que** le tourillon (5) de l'arbre d'entraînement (4) est cylindrique mais d'un diamètre réduit.
